# EUROPÄISCHE PATENTSCHRIFT

(11) **EP 3 610 762 B1**
(45) Veröffentlichungstag und Bekanntmachung des Hinweises auf die Patenterteilung: **16.06.2021**
(21) Anmeldenummer: 18189239.9
(22) Anmeldetag: 16.08.2018
(51) Int. Cl.: A47J 31/44, A47J 31/60

(54) **VORRICHTUNG ZUR AUFBEREITUNG EINER FLÜSSIGKEIT, INSBESONDERE MILCH, MIT INTEGRIERTEM SPÜLSYSTEM UND VERFAHREN ZUM SPÜLEN**
DEVICE FOR TREATING A LIQUID, IN PARTICULAR MILK, WITH INTEGRATED RINSING SYSTEM AND METHOD FOR RINSING
DISPOSITIF DE PRÉPARATION D'UN LIQUIDE, EN PARTICULIER DU LAIT, POURVU DE SYSTÈME DE RINÇAGE INTÉGRÉ ET PROCÉDÉ DE RINÇAGE

(43) Veröffentlichungstag der Anmeldung: 19.02.2020
(73) Patentinhaber: CUP&CINO Kaffeesystem-Vertrieb GmbH & Co. KG, 33161 Hövelhof (DE)
(72) Erfinder: Epping, Frank Josef Paul, 33161 Hövelhof (DE)
(74) Vertreter: BOVARD AG

(56) Entgegenhaltungen:
- EP-A1- 1 911 382
- EP-A1- 2 583 596
- DE-A1-102013 201 181
- JP-A- 2018 122 864

## Beschreibung

### Technisches Gebiet der Erfindung

Die vorliegende Erfindung bezieht sich auf eine Vorrichtung zur Aufbereitung einer Flüssigkeit, insbesondere Milch, mit einem integrierten Spülsystem, sowie ein Verfahren zum Spülen und/oder Reinigen einer derartigen Vorrichtung. Unter Aufbereitung wird ein Aufschäumen und/oder Erhitzen verstanden, so dass wahlweise warmer oder kalter Milchschaum bzw. warme oder kalte Milch mit der Vorrichtung erzeugt werden kann.

### Hintergrund der Erfindung

Zum Aufbereiten von Flüssigkeiten, insbesondere vom flüssigen Lebensmittel Milch, sind sogenannte Aufschäumvorrichtungen bekannt, welche bei der Zubereitung von milchhaltigen Heissgetränken, wie z.B. Cappuccino, Latte Macchiato, Café Latte, Schokolade oder Chai zum Erhitzen und Aufschäumen von Milch verwendet werden. Grundsätzlich wird dabei Milch mit Luft und/oder Dampf vermischt.

Aus EP 1 593 330 ist bekannt, Milch mittels einer Pumpe aus einem Behälter via eine Milchansaugleitung anzusaugen und zu einem Auslass zu fördern. Die Milch wird beim Ansaugen durch einen Durchlauferhitzer geleitet und erhitzt und Luft bzw. Gas wird in einer regelbaren Menge via Luftzufuhrleitung entweder der kalten oder der erhitzten Milch beigemischt. Anschliessend wird das Gemisch über eine Drosselstelle zum Auslass via eine Auslassleitung gefördert. Zur dosierten Luftzufuhr ist bekannt, einen einstellbaren Luftmengenregler oder auch eine fixe Düse in der Luftzufuhrleitung anzuordnen. Das Leitungssystem umfasst verschiedene Rückschlagventile, welche ein Zurücklaufen der Milch bzw. der Luft oder Gas entgegen einer Förderrichtung verhindern. Zur Spülung bzw. Reinigung wird Spül- bzw. Reinigungsflüssigkeit von einer Quelle über ein Spülventil via eine Leitung in die Milchansaugleitung mittels der Pumpe eingeleitet.

Aus EP 3 281 569 ist eine modulare Schaumeinheit bekannt, wobei diese neben einer Pumpe, einem Leitungssystem mit einer Milchansaugleitung und einer einzigen Leitung zur Verbindung der Pumpe mit einer Auslassdüse, einer Auslassleitung, und einem Luftanreicherungselement ein als Durchlauferhitzer ausgebildetes Heizelement umfasst, ausgebildet als Dickschichtheizung. Diese modulare Schaumeinheit kann als Modul kompakt zusammengefasst sein und als solches in einer Kühleinrichtung angeordnet sein. Das Modul wird mittels eines angeschlossenen Spülsystems gereinigt, welche die Schaumeinheit zwischen Ausgang aus einer Kühleinrichtung bis zu einem Mehrwegeventil in der Auslassleitung spült, über welches das Spülwasser ausgeleitet wird.

Aus JP 2018- 1228464 ist eine Getränkeversorgungsvorrichtung bekannt, welche neben der Erzeugung von kalter Milch bzw. kaltem Milchschaum und warmer Milch bzw. warmem Milchschaum eine Spülung der Milchzufuhrleitung vorsieht, welche hierfür Wasser in eine vorbestimmte Länge der Leitung füllt, welches in einem Standby-Zustand auch austauschbar ist. Ferner ist ein System von Luftzuführungsleitungen vorgesehen, wobei Luft zum Schäumen von Milch über eine Leitung und Luft zur Luftspülung über eine andere Leitung über eine Luftpumpe zuführbar sind.

Problematisch in Bezug auf die bekannten Aufschäumvorrichtungen ist, dass diejenigen Leitungsabschnitte, die von Milch bzw. aufgeschäumter Milch beaufschlagt werden, sich durch angetrocknete Milch mit der Zeit zusetzen. Neben der funktionellen Störung können diese Ablagerungen auch zu einer sensorischen Beeinträchtigung aufgrund des gerinnenden Milcheiweisses und eines Casein-Abbaus führen. Aber insbesondere aus hygienischen Gründen ist es notwendig, die milchführenden Teile der Vorrichtung zu spülen bzw. zu reinigen, bevorzugt nach jedem Aufschäum- bzw. Fördervorgang. Hierbei ist ein möglichst automatisierter Spül- und/oder Reinigungsvorgang wünschenswert, welcher schnell, sicher und unabhängig vom Bedienpersonal zu dem gewünschten reproduzierbaren Reinigungsergebnis führt. Unterscheiden wird zwischen Spülen, d.h. einem Durchspülen zyklisch oder nach jedem Bezug und Reinigen, insbesondere Spülen mit Reinigungsfluid, insbesondere am Ende eines Tages.

Generell wird zur Spülung bekannter Aufschäumvorrichtungen, einschliesslich der Leitungen, Spülflüssigkeit über ein Spülventil in einen Abschnitt der Milchansaugleitung eingeleitet und über ein weiteres Ventil nach dem Durchströmen der zur Aufschäumvorrichtung gehörenden Elemente, in der Regel aber ohne den Abschnitt zur Auslassdüse, in einen Auffangbehälter oder einen Ablauf ausgeleitet. Der Abschnitt zur Auslassdüse wird häufig nur periodisch gespült, beispielsweise je nach Einstellung alle 10 min. Dies ist insbesondere problematisch, da das Ausleiten von Spülflüssigkeit nach dieser Spülphase in eine Tropfschale für den Kunden sichtbar ist. Ein Abschnitt der Milchansaugleitung, welcher sich zwischen dem Spülventil und dem Milchbehälter erstreckt und insbesondere von oben in den Milchbehälter hineinragt, wird in der Regel in einem gesonderten Spül- bzw. Reinigungsvorgang weniger häufig gereinigt. Dieser Abschnitt ist im Allgemeinen in einem gekühlten Bereich angeordnet und demnach weniger hygienisch belastet.

Neben den vorhergehend genannten Aspekten einer Spülung von Aufschäumvorrichtungen ist auch zu beachten, dass die Schaumbildung von Milch neben der Temperatur und Eigenschaften der Milch wie Fettgehalt, Pasteurisierung, dem pH-Wert, dem Proteingehalt und der Lagerungszeit auch von einer genau dosierten Luftzufuhr abhängig ist. Eine präzise und dossierte Luftzuführung ist für eine hohe und wiederholbare Milchschaumqualität unerlässlich. Allerdings zeigt sich in der Praxis, dass für eine gleichbleibende Milchschaumkonsistenz es darüber hinaus unerlässlich ist, dass keine Rückstände von Milch bzw. Milchschaum und/oder Spül- und/oder Reinigungsflüssigkeit innerhalb der Vorrichtung einschliesslich eventuell angeordneter Ventile, insbesondere in Abschnitten der Luftzufuhr, antrocknen und eine negative Wirkung hinsichtlich einer exakten Dosierung entfalten. Insbesondere ist eine vollständig gereinigte Luftzufuhrleitung für eine exakte Luftdosierung erforderlich.

Die Bedeutung einer exakt definierten und gepulsten Luftzufuhr zur Milchschaumerzeugung geht aus DE 10 2015 117 650 hervor. Bekannt ist eine Vorrichtung zum Erhitzen und Aufschäumen von Milch mit einem Dampferzeuger zur Erzeugung von Dampf und einer Druckgasquelle zur Erzeugung von Druckpulsen von komprimiertem Gas, welche zusammengeführt ein Dampf-Gas-Gemisch bilden, das in die zu schäumende Flüssigkeit eingeleitet wird. Somit sollen die Eigenschaften des gebildeten Schaums hinsichtlich Konsistenz, Cremigkeit, Porosität, Schaumdichte und Schaumstabilität durch einen Bediener flexibel einstellbar sein. Diese Anordnung, um eine definierte und/oder gepulste Lufteinspritzung zu erreichen, ist sehr aufwendig.

### Zusammenfassung der Erfindung

Der vorliegenden Erfindung liegt daher die Aufgabe zugrunde, für eine Vorrichtung zur Aufbereitung von Flüssigkeit, insbesondere von Milch, eine kompakte, robuste und effiziente Vorrichtung zur wahlweisen Bereitung von kaltem oder warmem Milchschaum oder von kalter oder warmer Milch zu schaffen, die sich durch eine reproduzierbare und hohe Milchschaumqualität auszeichnet. Darüber hinaus soll die Vorrichtung und das entsprechende Verfahren hinsichtlich des Spül- und Reinigungseffekts optimiert werden.

Diese Aufgaben werden mit einer Vorrichtung gemäss Anspruch 1 und einem Verfahren gemäss Anspruch 8 gelöst. Weitere vorteilhafte Merkmale ergeben sich aus den abhängigen Patentansprüchen, der nachfolgenden Beschreibung sowie der Zeichnung.

Die erfindungsgemässe Vorrichtung zur Aufbereitung einer Flüssigkeit, insbesondere Milch, mit integriertem Spülsystem, umfasst mindestens einen Vorratsbehälter zur Bevorratung der Flüssigkeit, angeordnet in einer Kühleinrichtung, eine Pumpe, ein Leitungssystem, umfassend eine Milchansaugleitung, über welche der mindestens eine Vorratsbehälter mit der Pumpe verbindbar ist, eine Auslassleitung, über welche die Pumpe mit mindestens einem Auslass verbindbar ist, und eine Spülleitung, über welche die Milchansaugleitung mit einer Spülflüssigkeit beaufschlagbar ist, einen Luftmengenregler, mittels welchem Luft dosierbar über eine Luftzufuhrleitung an einer Einleitungsstelle in die Milchansaugleitung zuführbar ist, und ein als Durchlauferhitzer gestaltetes Heizelement, welches in der Auslassleitung angeordnet ist und als Dickschichtheizung ausgebildet ist. Dabei ist in der Luftzufuhrleitung ein zweites Rückschlagventil und ein erstes Rückschlagventil zwischen Luftmengenregler und Einleitungsstelle in die Milchansaugleitung angeordnet, wobei erstes Rückschlagventil und zweites Rückschlagventil als direkt schliessende Rückschlagventile ausgebildet sind und die Luftzufuhrleitung zwischen erstem Rückschlagventil und zweitem Rückschlagventil über ein Ventil an die Spülleitung anschliessbar ist.

In der Erfindung ist in der Luftzufuhrleitung der Luftmengenregler zur dosierten Luftzufuhr und das erste und zweite Rückschlagventil vorgesehen, wobei der Luftmengenregler als Proportionalventil ausgebildet sein kann. Das zum Anschliessen der Luftzufuhrleitung an das Spülsystem genannte Ventil ist zwischen erstem und zweitem Rückschlagventil angeordnet. Das erste Rückschlagventil öffnet oder schliesst denjenigen Abschnitt zwischen dem genannten Ventil und der Luftzufuhrleitung in Richtung Einleitungsstelle und das zweite Rückschlagventil öffnet oder schliesst denjenigen Abschnitt zwischen dem genannten Ventil und der Luftzufuhrleitung Richtung Luftmengenregler. Erste und zweite Rückschlagventile sind vorzugsweise unabhängig voneinander schaltbar.

Es zeigt sich, dass eine definierte Öffnung von zwei seriell in einem Leitungssystem angeordneten Rückschlagventilen kaum möglich ist, ohne dass es zu Pulsation im Leitungssystem kommt. Insbesondere bei der Milchförderung ergeben sich so negative Auswirkungen auf die zu erreichende Milchschaumqualität. Demnach ist es erforderlich, erste und zweite Rückschlagventile in der Luftzufuhrleitung derart auszubilden, dass sie aufeinander abgestimmt eine geöffnete oder geschlossene Stellung einnehmen können. Dabei ist auch ein drittes Rückschlagventil in der Milchansaugleitung zu beachten, welches einen Rückfluss angesaugter Milch entgegen einer Förderrichtung verhindern kann.

Rückschlagventile sind häufig als federbelastete Rückschlagventile ausgebildet, welche eine Durchströmung in einer Richtung zulassen. Der Mechanismus federbelasteter Rückschlagventile umfasst ein Schliesselement, welches mittels einer Federkraft einer Rückstellfeder in einen entsprechend geformten Sitz dichtend gedrückt wird. Übersteigt eine auf das Schliesselement wirkende Gegenkraft die Federkraft der Rückstellfeder, wird der Durchfluss geöffnet. Der Öffnungsdruck ist beispielsweise über die Federkraft der Rückstellfeder einstellbar. Bei der erfindungsgemässen Vorrichtung zur Aufbereitung von Flüssigkeit mit einem integrierten Spülsystem wird der Öffnungsdruck massgeblich durch den Unterdruck an der Saugseite der Pumpe bestimmt. Ist der erzeugte Unterdruck an der Saugseite nicht ausreichend, öffnen die ersten und zweiten Rückschlagventile in der Luftzufuhrleitung nicht oder nur unvollständig. Ist der Unterdruck auf der Saugseite ausreichend hoch, um die entsprechenden Rückschlagventile in der Luftzufuhrleitung zu öffnen, kann es zu Vibrationen an den Rückschlagventilen kommen, so dass eine exakt dosierte Luftzufuhr nicht möglich ist. Ferner ist gerade die Funktionsweise von federbelasteten Rückschlagventilen besonders anfällig für Verschmutzungen, welche durch eintretende Milch und/oder Milchschaum verursacht wird.

Gemäss der Erfindung sind das in der Luftzufuhrleitung der erfindungsgemässen Vorrichtung angeordnete erste und das zweite Rückschlagventil als direkt schliessende Rückschlagventile ausgebildet. Der Mechanismus derartiger Rückschlagventile umfasst ein Schliesselement, welches durch die auf das Schliesselement wirkende Schwerkraft und/oder durch ein Medium in den Sitz gedrückt wird und so dichtend schliesst. Damit direkt schliessende Rückschlagventile zumindest in der Luftzufuhrleitung angeordnet werden können, ist vorgesehen, dass die Luftzufuhrleitung in der erfindungsgemässen Vorrichtung zur Aufbereitung von Flüssigkeit in einer vertikalen Ausrichtung angeordnet ist. Demnach sind die in der Luftzufuhrleitung umfassten Luftmengenregler und zweites und erstes Rückschlagventil von oben nach unten in der Luftzufuhrleitung vertikal angeordnet. Bei einer Luftzufuhr entlastet diese vertikale Orientierung die entsprechenden Rückschlagventile, so dass diese vollständig öffnen und eine exakt dosierte Luftzufuhr ohne Schwankungen möglich ist. Bei dieser Anordnung steht maximal nur das erste Rückschlagventil eventuell mit Milch bzw. Milchschaum in Kontakt, wird aber auch regelmässig zumindest von einer Seite gespült, insbesondere dann wenn die Milchansaugleitung gespült wird. Die Milchansaugleitung kann seitlich, d.h. weitgehend horizontal, in der Vorrichtung angeordnet sein, so dass Milch in horizontaler Richtung über die Milchansaugleitung angesaugt wird.

In einer weiteren Ausführungsform der erfindungsgemässen Vorrichtung zur Aufbereitung von Flüssigkeit mit integriertem Spülsystem ist vorgesehen, dass die Luft zum Aufschäumen der Milch mit konstanter Temperatur über den Luftmengenregler dosiert zugeführt wird. Vorzugsweise handelt es sich um Luft tiefer Temperatur, welche zur Erzeugung einer wiederholbaren hohen Milchschaumqualität in besonderer Weise geeignet ist. Bevorzugt wird die Luft aus der Kühleinrichtung bezogen, in welcher die Milch gekühlt bevorratet ist. Möglich ist auch, dass die erfindungsgemässe Vorrichtung in der Kühleinrichtung als modulare Schaumeinheit weitgehend komplett aufgenommen ist. Eine zugeführte gekühlte Luft vermeidet Temperaturbedingte Schwankungen der Qualität des Milchschaums. Die Milchschaumqualität ist unabhängig von saisonal schwankenden Umgebungstemperaturen und so von gleichbleibender hoher Qualität.

Ferner ist vorgesehen, dass stromabwärts der Pumpe eine Drosseleinrichtung in der Auslassleitung angeordnet ist, wobei in dieser ein Mehrwegeventil angeordnet ist, welches die Auslassleitung wahlweise mit einem Ausguss zum Ausleiten von Spülflüssigkeit und via einer Leitung mit dem Auslass verbindet, an dem aufbereitete Flüssigkeit bezogen werden kann. Insbesondere ist die Leitung zwischen Mehrwegeventil und Auslass derart dimensioniert, dass diese nur ein kleines Füllvolumen aufweist, vorzugsweise zwischen 2 ml und 3 ml.

Darüber hinaus ist die Milchansaugleitung ausserhalb der Kühleinrichtung mittels eines Spülventils an das integrierte Spülsystem anschliessbar. Bei einem Spülvorgang, bevorzugt durchgeführt zwischen zwei Bezügen von aufbereiteter Milch, werden die unmittelbar mit Milch bzw. Milchschaum beaufschlagten Leitungen und Elemente in denjenigen Bereichen ausserhalb der Kühleinrichtung und auch die Luftzufuhrleitung zumindest teilweise gespült und gereinigt. Dies ist vor allem notwendig, da sich bei einer Milchaufschäumung, insbesondere bei hohen Temperaturen, der Milchschaum auch in Richtung Luftzufuhrleitung ausdehnen kann, so dass sich in dieser veränderte Bedingungen ergeben, welche eine exakt dosierte Luftzufuhr beeinträchtigen. Ferner kann vorteilhaft verhindert werden, dass ein in der Luftzufuhrleitung angeordnetes und mit der Milch bzw. Milchschaum in Kontakt stehendes Rückschlagventil verschmutzt und in seiner Funktionsfähigkeit beeinträchtigt wird.

Das genannte Ventil, über welches die Luftzufuhrleitung mit dem Spülsystem verbunden und mit Spül- und/oder Reinigungsflüssigkeit beaufschlagt werden kann, wird mit einem deutlichen Abstand zur Einleitungsstelle der Luftzufuhrleitung in die Milchansaugleitung angeordnet, so dass sichergestellt ist, dass der Abschnitt der Luftzufuhrleitung, in den Milchschaum eindringen könnte, von der Spülflüssigkeit gespült wird. Vorzugsweise ist das Ventil gegenüber der Einleitungsstelle an einem höher gelegenen Niveau angeordnet, so dass die Spülflüssigkeit auch durch die Schwerkraft in die zu reinigenden Abschnitte strömt.

Das integrierte Spülsystem kann als Spül- und/oder Reinigungsflüssigkeit jedes Medium in flüssiger Form verwenden, welches geeignet ist, die mit Milch bzw. Milchschaum in Kontakt kommenden Element, einschliesslich der Luftzufuhrleitung, vollständig zu reinigen. Alternativ ist auch eine Reinigung bzw. Spülung mit einem gasförmigen Medium denkbar. Besonders geeignet ist eine Spülung mit kaltem oder erwärmtem Wasser oder einer Lösung mit Chemikalienzusatz und weiteren Klarspülungen. Neben einer Trocknung bei geöffnetem Lufteinlass und aktivierter Pumpe kann auch Dampf oder Druckluft verwendet werden, um eine vollständige Trocknung der Elemente und Leitungen zu erreichen.

Ein erfindungsgemässes Verfahren zum Spülen der Vorrichtung zur Aufbereitung von Flüssigkeit, insbesondere Milch, mit einem integrierten Spülsystem sieht vor, dass für einen Spülvorgang über eine Spülleitung eine Spülflüssigkeit zugeführt werden kann, wobei die Spülflüssigkeit zumindest teilweise über die Milchansaugleitung der Pumpe, dem als Durchlauferhitzer, insbesondere als Dickschichtheizung, gestalteten Heizelement und der Auslassleitung zugeführt wird, wobei auch der Luftzufuhrleitung über ein Ventil Spülflüssigkeit zugeführt und diese gespült wird.

Die Auslösung eines Reinigungs- bzw. Spülvorgangs kann über eine Zeitsteuerung erfolgen, wobei nach jeder Abgabe von aufbereiteter Milch an dem Auslass oder nach einer bestimmbaren Anzahl von Abgaben automatisch eine Spülung aktiviert wird. Der Spülvorgang kann mittels einer Steuerung gesteuert werden, wobei Sensoren angeordnet sind, welche Daten hinsichtlich einer Befüllung des Systems und hinsichtlich der Art der Befüllung erfassen und an die Steuerung übermitteln. Dem Spülsystem ist das Spülventil in der Milchansaugleitung und das genannte Ventil in der Luftzufuhrleitung zugeordnet, welche wahlweise geschaltet werden können, um einerseits die Spülflüssigkeit über die Milchansaugleitung ab einer Kühleinrichtung und andererseits die Spülflüssigkeit über die Luftzufuhrleitung zu führen. Eine gleichzeitige Spülung ist ebenfalls möglich. Die Spülung ist auch in umgekehrter Richtung möglich. Bei einer Spülung nach jeder Abgabe von aufbereiteter Milch befindet sich beim Starten der Milchschaumaufbereitung in der erfindungsgemässen Vorrichtung Spülflüssigkeit. Dabei ist die erfindungsgemässe Vorrichtung von dem Auslass, d.h. in einem Abschnitt zwischen Mehrwegeventil und Auslass bzw. Auslassdüse für Milch bzw. Milchschaum bis zur Grenze zum gekühlten Bereich mit Spülflüssigkeit gefüllt, vorzugsweise Wasser. Bei geschlossenem Mehrwegeventil verbleibt das Wasser in dem Abschnitt zwischen diesem und dem Auslass und sperrt diesen für Nachlaufen von beispielsweise Milch oder Milchschaum. Zum Ablassen der Spülflüssigkeit öffnet das in der Auslassleitung vorgesehene Mehrwegeventil und das Wasser bzw. Spülflüssigkeit kann in einen Behälter oder einen Ausguss ausgeleitet werden. Zeitgleich wird die Pumpe gestartet und der Luftmengenregler ist geöffnet. An dem Zeitpunkt, an dem die angesaugte Milch bzw. Milchschaum das Mehrwegeventil erreicht, dies kann über entsprechende angeordnete Sensoren detektiert werden, bzw. mit einer zeitlichen Verzögerung, wird dieses derart geschaltet, dass aufbereitete Milch bzw. Milchschaum dem Auslass zugeleitet wird. Wasser, welches in dem Abschnitt zwischen Mehrwegeventil und Auslass vorhanden war, wird ebenfalls in Richtung Auslass gedrückt. Allerdings ist diese Menge so gering, dass das Wasser keine Beeinträchtigung der Milch bzw. des Milchschaums für das zu erzeugende Getränk darstellt. Wird Ende des Bezugs von aufbereiteter Milch detektiert, öffnet das genannte Ventil, über welches die Luftzufuhrleitung an das Spülsystem anschliessbar ist und Spülflüssigkeit wird zugeführt. Aufgrund des Drucks der zugeführten Spülflüssigkeit öffnet das erste Rückschlagventil und schliesst das zweite Rückschlagventil den Abschnitt in Richtung Luftmengenregler und das dritte Rückschlagventil die Milchansaugleitung, wobei der Saugdruck der Pumpe ausgeglichen wird. Bevorzugt weist die Spülflüssigkeit einen Druck von mindestens 1 bar auf, vorzugsweise von 2 bar. Mit einer zeitlichen Verzögerung, bevorzugt im Bereich von etwa 0.5 sec, wird der Luftmengenregler in Schliessstellung gebracht. Erreicht die Spülflüssigkeit das Mehrwegeventil, öffnet dieses, um die Spülflüssigkeit abzulassen. Mit dem Spül- bzw. Reinigungsvorgang werden die Komponenten der erfindungsgemässen Vorrichtung zwischen Mehrwegeventil an der Auslassseite und dem genannten Ventil gespült. Alternativ kann der Abschnitt zwischen Mehrwegeventil und Auslass zyklisch gespült werden.

Bei der erfindungsgemässen Vorrichtung mit integriertem Spülsystem kann vorteilhaft das als Dickschichtheizung ausgebildete Heizelement genutzt werden. Da zwischen zwei Milch- bzw. Milchschaumbezügen das als Durchlauferhitzer konzipierte Dickschichtheizung mit Spülflüssigkeit, z.B. Wasser gefüllt ist, kann dieses mit einer hohen Energie aufgeheizt werden, ohne dass der nachströmende Milchschaum beeinflusst wird. So ergeben sich kurze Aufheizperioden.

### Kurzbeschreibung der Zeichnungen

Ein Ausführungsbeispiel der Erfindung wird nachfolgend anhand der Zeichnung näher erläutert. Es zeigt:

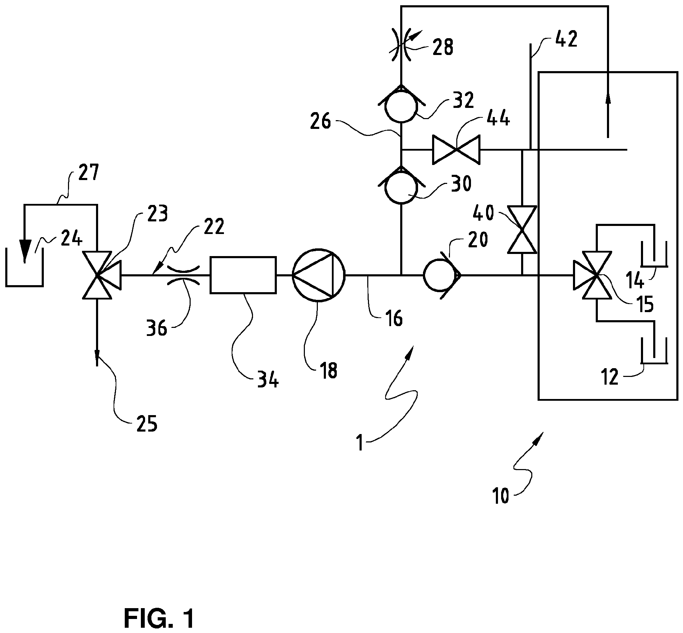

Figur 1 schematisch eine erfindungsgemässe Vorrichtung zur Aufbereitung eines flüssigen Lebensmittels, insbesondere Milch, mit einem integrierten Spülsystem.

### Detaillierte Beschreibung der bevorzugten Ausführungsformen

Die in Figur 1 gezeigte erfindungsgemässe Vorrichtung 1 zur Aufbereitung einer Flüssigkeit, insbesondere Milch, umfasst bevorratet in einem ersten Vorratsbehälter 12 Milch eines Typs und in einem zweiten Vorratsbehälter 14 Milch eines anderen Typs bzw. Milchersatz. Die ersten und zweiten Vorratsbehälter 12, 14 sind in dem dargestellten Ausführungsbeispiel über ein 3/2-Wegeventil 15 mit einer Milchansaugleitung 16 mit einer Saugseite einer Pumpe 18 verbunden, so dass Milch bzw. Milchersatz aus dem ersten und/oder zweiten Vorratsbehälter 12, 14 entnommen werden kann. In der Milchansaugleitung 16 ist ein Rückschlagventil angeordnet, bezeichnet als drittes Rückschlagventil 20, welches in Richtung der Pumpe 18 öffnet. Die Pumpe 18 ist auf ihrer Druckseite über eine einzige Auslassleitung 22 mit einem Auslass 24 verbunden, an welchem aufbereitete Milch bzw. Milchschaum abgegeben werden kann. In der Auslassleitung 22 ist vor dem Auslass 24 ein Mehrwegeventil 23 angeordnet, so dass wahlweise Strömung Richtung Auslass 24 über eine Leitung 27 oder Strömung Richtung einem Ausguss 25 geöffnet ist.

Auf der Saugseite der Pumpe 18 mündet in die Milchansaugleitung 16 eine Luftzufuhrleitung 26, in der ein Luftmengenregler 28 vorgesehen ist. Der Luftmengenregler 28 kann als Proportionalventil ausgebildet sein, so dass Luft exakt dosiert aus der Umgebung zugeführt wird. Insbesondere kann die Luft aus einer Kühleinrichtung 10 bezogen werden und hat somit eine von der Umgebungstemperatur unabhängige konstante Temperatur. Über die Luftzufuhrleitung 26 kann der Milch eine dosierte Menge an Luft beigemischt werden, wobei sich ein Milch/Luft-Gemisch bildet, welches von der Pumpe 18 angesaugt wird. In der Luftzufuhrleitung 26 sind erste und zweite Rückschlagventile 30, 32 angeordnet, welche noch genauer beschrieben werden.

An der Druckseite der Pumpe 18 ist an der Auslassleitung 22 ein als Durchlauferhitzer gestaltetes Heizelement 34 angeordnet. Das Heizelement 34 ist als Dickschichtheizung ausgebildet, wobei an dem Heizelement 34 ein elektrischer Heizwiderstand auf einem Träger aufgebracht ist, an welchem ein Strömungsweg vorgesehen ist. Beim Strömen entlang des Strömungsweges wird bei aktiviertem Heizelement 34 die Flüssigkeit, d.h. Milch oder ein Milch/- Luft-Gemisch auf eine vorbestimmte Temperatur gebracht, welche mittels eines Temperatursensors (nicht dargestellt) geregelt werden kann. Bei eingeschaltetem Heizelement 34 kann warme oder heisse Milch und/oder Milchschaum erzeugt werden, bei ausgeschaltetem Heizelement 34 kann kalte Milch oder Milchschaum dem Auslass 24 zugeleitet werden. Dies ist insbesondere durch die Dickschichtheizung möglich mit ihrer schnellen Reaktionszeit und einer minimalen Abwärme.

Ferner ist gemäss Fig. 1 in der Auslassleitung 22 stromabwärts des Heizelements 34 eine Drosseleinrichtung 36 angeordnet ist, welche aus dem bereits vorhandenen, eventuell erwärmten Milch/Luft-Gemisch einen stabilen und homogenen Milchschaum erzeugt. Die Drosseleinrichtung 36 kann als Düse, Blende, feste oder einstellbare Düse ausgebildet sein, wobei an einer Drosselstelle eine Verengung der Durchflussquerschnittsfläche vorgesehen ist. Insbesondere kann die Drosseleinrichtung 36 als eine durch eine Steuereinheit (nicht dargestellt) oder eine andere Einrichtung einstellbare Drossel ausgebildet sein. Die Drosseleinrichtung 36 erzeugt einen Gegendruck, welcher sich auch in dem in dem Heizelement 34 umfassten Strömungsweg bemerkbar macht. Demnach wird einer tendenziell mit höherer Temperatur zunehmenden Ausdehnung und damit sich vergrössernder Luftblasen im Milchschaum entgegengewirkt. Kleinere Luftblasen in einem Milch/Luft-Gemisch erleichtern die Erwärmung dieses Gemischs, welches ansonsten durch Luft als schlechter Wärmeleiter negativ beeinflusst ist.

Eine einstellbare Drosseleinrichtung 36 ermöglicht ebenso wie eine exakt dosierte Luftmenge und die einstellbare Temperatur ein optimiertes Vermischen von Luft und Milch zu einem Milch/Luft-Gemisch und eine Dispersion kleiner Luftblasen in dem Gemisch, welche für eine hohe Schaumqualität stehen.

Die Vorrichtung 1 zum Aufbereiten von Flüssigkeit kann in einem Gehäuse als ein Modul zusammengefasst sein, welches in der Kühleinrichtung 10 aufnehmbar ist. Quasi alle Bestandteile der erfindungsgemässen Vorrichtung 1 können in der Kühleinrichtung 10 aufgenommen sein, wobei die Kühleinrichtung 10 als ein Beistellgerät zu einer Kaffeemaschine oder auch als integraler Bestandteil einer Kaffeemaschine ausgebildet sein kann.

Die erfindungsgemässe Vorrichtung 1 umfasst darüber hinaus ein integriertes Spülsystem zur Spülung bzw. Reinigung der in der erfindungsgemässen Vorrichtung 1 umfassten Elemente. Mittels eines Spülventils 40 ist die Milchansaugleitung 16 mit dem Spülsystem verbindbar, insbesondere an eine Spülleitung 42 anschliesbar. Somit sind die Milchführenden Elemente, beispielsweise die Milchansaugleitung 16, die Pumpe 18, das Heizelement 34, die Drosseleinrichtung 36 und die Auslassleitung 22 einschliesslich der Leitung 27 bis zum Auslass 24 und der Auslass 24 selbst mit der Spülflüssigkeit beaufschlagbar, wobei beim Öffnen des Spülventils 40 das dritte Rückschlagventil 20 die Milchansaugleitung 16 freigibt. Dabei kann das dritte Rückschlagventil 20 bei einem Druck der Spülflüssigkeit von mindestens 1 bar öffnen. Im Gegensatz zu bekannten Reinigungs- bzw. Spülsystemen für Vorrichtungen zur Erzeugung von Milchschaum ist erfindungsgemäss mit dem integrierten Spülsystem vorgesehen, dass auch die gekühlten Bereiche ausreichend gespült werden, in denen aufgrund der niedrigen Temperaturen die Entstehung von Milchsäure und Casein nur gering ist.

Wesentlich ist nun, dass mit dem erfindungsgemäss integrierten Spülsystem auch die Luftzufuhrleitung 26 gespült wird. Hierfür ist diese über ein Ventil 44 an die Spülleitung 42 und damit an eine Quelle für Spülflüssigkeit anschliessbar. Demnach besteht die Möglichkeit, nicht nur die mit Milch beaufschlagten Leitungsabschnitte sondern auch die Luftzufuhrleitung 26 jederzeit zu spülen bzw. zu reinigen. Die Spülleitung 42 weist einen Abschnitt auf, in dem das Ventil 44 angeordnet ist, und welcher in der Luftzufuhrleitung 26 zwischen dem ersten Rückschlagventil 30 und dem zweiten Rückschlagventil 32 mündet. Während der Beaufschlagung der Spülleitung 42 mit Spülflüssigkeit befindet sich das zweite Rückschlagventil 32 in Schliessstellung, während das erste Rückschlagventil 30 geöffnet ist.

Wie in der Figur 1 dargestellt, ist von besonderer Bedeutung, dass die Luftzufuhrleitung 26 mit dem Luftmengenregler 28, dem zweiten Rückschlagventil 32 und dem ersten Rückschlagventil 30 in einer vertikalen Anordnung orientiert sind. Somit ist es möglich, das erste und das zweite Rückschlagventil 30, 32 als direkt schliessende Rückschlagventile auszubilden, welche durch die vertikale Ausrichtung hinsichtlich der Luftzufuhr durch die auf ein Schliesselement wirkende Schwerkraft entlastet werden. Demnach ist eine Spülung bzw. Reinigung der Luftzufuhrleitung 26 auch dann möglich, wenn der von der Pumpe 18 erzeugte Unterdruck in der Luftzufuhrleitung 26 alleine nicht ausreichend wäre, um das erste Rückschlagventil 30 zu öffnen.

Zusammenfassend weist die erfindungsgemässe Vorrichtung 1 zur Aufbereitung von Flüssigkeit, insbesondere Milch, mit integriertem Spülsystem den Vorteil auf, dass durch Spülung bzw. Reinigung der Luftzufuhrleitung 26 und durch die vertikale Anordnung von direkt schliessenden Rückschlagventilen 30, 32 in der Luftzufuhrleitung 26 eine Verbesserung der hygienischen und sensorischen Verhältnisse erreicht wird und die Luftzufuhr exakt dosiert zugeführt werden kann. Dies wird insbesondere ohne zusätzlichen Aufwand erreicht, da die Luftzufuhrleitung 26 im gleichen Spülzyklus wie die mit Milch beaufschlagten Elemente gespült und gereinigt werden kann.

## Patentansprüche

1. Vorrichtung (1) zur Aufbereitung einer Flüssigkeit, insbesondere Milch, mit integriertem Spülsystem, umfassend
- mindestens einen Vorratsbehälter (12, 14) zur Bevorratung der Flüssigkeit, angeordnet in einer Kühleinrichtung (10);
- eine Pumpe (18);
- ein Leitungssystem, umfassend
-- eine Milchansaugleitung (16), über welche der mindestens eine Vorratsbehälter (12, 14) mit der Pumpe (18) verbindbar ist,
-- eine Auslassleitung (22), über welche die Pumpe (18) mit mindestens einem Auslass (24) verbindbar ist, und
-- eine Spülleitung (42), über welche die Milchansaugleitung (16) mit einer Spülflüssigkeit beaufschlagbar ist,
- einen Luftmengenregler (28), mittels welchem Luft dosierbar über eine Luftzufuhrleitung (26) an einer Einleitungsstelle in die Milchansaugleitung (16) zuführbar ist, und
- ein als Durchlauferhitzer gestaltetes Heizelement (34), welches in der Auslassleitung (22) angeordnet und als Dickschichtheizung ausgebildet ist,
**dadurch gekennzeichnet, dass**
in der Luftzufuhrleitung (26) ein zweites Rückschlagventil (32) und ein erstes Rückschlagventil (30) zwischen Luftmengenregler (28) und Einleitungsstelle in die Milchansaugleitung (16) angeordnet sind, wobei das erste Rückschlagventil (30) und das zweite Rückschlagventil (32) als direkt schliessende Rückschlagventile ausgebildet sind und die Luftzufuhrleitung (26) zwischen erstem Rückschlagventil (30) und zweitem Rückschlagventil (32) über ein Ventil (44) an die Spülleitung (42) anschliessbar ist.

2. Vorrichtung (1) nach Anspruch 1, **dadurch gekennzeichnet, dass** der in der Luftzufuhrleitung (26) umfasste Luftmengenregler (28), das zweite Rückschlagventil (32) und das erste Rückschlagventil (30) in einer vertikalen Anordnung übereinander orientiert sind.

3. Vorrichtung (1) nach einem der vorhergehenden Ansprüche, **dadurch gekennzeichnet, dass** der Luftmengenregler (28) eingerichtet ist, um Luft aus der Kühleinrichtung (10) dosiert zu zuführen.

4. Vorrichtung (1) nach einem der vorhergehenden Ansprüche, **dadurch gekennzeichnet, dass** die Spülleitung (42) über ein Spülventil (40) an die Milchansaugleitung (16) ausserhalb der Kühleinrichtung (10) anschliessbar ist.

5. Vorrichtung (1) nach einem der vorhergehenden Ansprüche, **dadurch gekennzeichnet, dass** stromabwärts der Pumpe (18) eine Drosseleinrichtung (36) in der Auslassleitung (22) angeordnet ist.

6. Vorrichtung (1) nach einem der vorhergehenden Ansprüche, **dadurch gekennzeichnet, dass** in der Auslassleitung (22) ein Mehrwegeventil (23) angeordnet ist, welches die Auslassleitung (22) wahlweise mit einem Ausguss (25) zum Ausleiten von Spülflüssigkeit und dem Auslass (24) verbindet, an dem aufbereitete Flüssigkeit bezogen werden kann.

7. Vorrichtung (1) nach einem der vorhergehenden Ansprüche, **dadurch gekennzeichnet, dass** eine Leitung (27) zwischen Mehrwegeventil (23) und Auslass (24) ein Füllvolumen von 2 ml bis 3 ml aufweist.

8. Verfahren zum Spülen einer Vorrichtung (1) zur Aufbereitung von Flüssigkeit, insbesondere Milch, mit einem integrierten Spülsystem nach einem der Ansprüche 1 bis 7, **dadurch gekennzeichnet, dass** für einen Spülvorgang über eine Spülleitung (42) eine Spülflüssigkeit zugeführt werden kann, wobei die Spülflüssigkeit zumindest teilweise über die Milchansaugleitung (16), die Pumpe (18), dem als Durchlauferhitzer gestalteten Heizelement (34) und der Auslassleitung (22) zugeführt wird, wobei auch der Luftzufuhrleitung (26) über ein Ventil (44) Spülflüssigkeit zugeführt und gespült wird.

9. Verfahren nach Anspruch 8, **dadurch gekennzeichnet, dass** ein Spülvorgang nach jedem Bezug von aufbereiteter Flüssigkeit bis einschliesslich dem Auslass (24) erfolgt.

10. Verfahren nach Anspruch 8 oder 9, **dadurch gekennzeichnet, dass** bei einem Spülvorgang die Milchansaugleitung (16), die Luftzufuhrleitung (26) und die Auslassleitung (22) zumindest teilweise gleichzeitig gespült werden.

11. Verfahren nach einem der Ansprüche 8 bis 10, **dadurch gekennzeichnet, dass** während eines Spülvorgangs das Mehrwegeventil (23) in der Auslassleitung (22) zumindest zeitweise derart geöffnet ist, dass die Auslassleitung und die Leitung (27) bis zum Auslass (24) mit Spülflüssigkeit befüllt ist.

12. Verfahren nach einem der Ansprüche 8 bis 11, **dadurch gekennzeichnet, dass** vor jedem Bezug von aufbereiteter Flüssigkeit am Auslass (24) die Vorrichtung (1) von einem Spülventil (40) und dem Ventil (44) bis zum Auslass (24) mit Spülflüssigkeit gefüllt ist, wobei beim Starten eines Bezugs das Mehrwegeventil (23) geöffnet wird, um die Spülflüssigkeit aus der Vorrichtung (1) über den Ausguss (25) auszuleiten und dann geschlossen wird, wenn die aufbereitete Flüssigkeit das Mehrwegeventil (23) erreicht.

## Claims

1. Device (1) for preparation of a liquid, in particular milk, with integrated rinsing system, comprising
- at least one reservoir (12, 14) for storing of the liquid, disposed in a cooling unit (10);
- a pump (18);
- a line system, comprising
-- a milk suction line (16), via which the at least one reservoir (12, 14) is connectible to the pump (18),
-- an outlet line (22), via which the pump (18) is connectible to at least one outlet (24), and
-- a rinsing line (42), via which the milk suction line (16) is loadable with a rinsing fluid,
- an air volume controller (28), by means of which air, via an air supply line (26), is able to be led in a metered way to an inlet point into the milk suction line (16), and
- a heating element (34) designed as continuous-flow heater, which is disposed in the outlet line (22) and is designed as thick film heater,
**characterized in that**
disposed in the air supply line (26) between air volume controller (28) and inlet point into the milk suction line (16) are a second check valve (32) and a first check valve (30), whereby the first check valve (30) and the second check valve (32) are designed as directly closing check valves and the air supply line (26) is connectible between first check valve (30) and second check valve (32) to the rinsing line (42) via a valve (44).

2. Device (1) according to claim 1, **characterized in that** the air volume controller (28) included in the air supply line (26), the second check valve (32) and the first check valve (30) are positioned above one another in a vertical configuration.

3. Device (1) according to one of the preceding claims, **characterized in that** the air volume controller (28) is set up to supply air out of the cooling unit (10) in a metered way.

4. Device (1) according to one of the preceding claims, **characterized in that** the rinsing line (42) is connectible to the milk suction line (16) outside the cooling unit (10) via a rinsing valve (40).

5. Device (1) according to one of the preceding claims, **characterized in that** disposed in the outlet line (22) downstream from the pump (18) is a restrictor (36).

6. Device (1) according to one of the preceding claims, **characterized in that** disposed in the outlet line (22) is a manifold valve (23), which selectively connects the outlet line (22) to a nozzle (25) for discharging rinsing fluid and the outlet (24) at which prepared liquid can be dispensed.

7. Device (1) according to one of the preceding claims, **characterized in that** a line (27) between manifold valve (23) and outlet (24) has a filling volume of 2 ml to 3 ml.

8. Method for rinsing a device (1) for preparation of liquid, in particular milk, with an integrated rinsing system according to one of the claims 1 to 7, **characterized in that**, for a rinsing operation via a rinsing line (42), a rinsing fluid can be supplied, the rinsing fluid being led at least partially via the milk suction line (16), the pump (18), the heating element (34) designed as continuous-flow heater, and the outlet line (22), whereby also the air supply line (26) is supplied and rinsed with rinsing fluid via a valve (44).

9. Method according to claim 8, **characterized in that** a rinsing operation takes place after each dispensing of prepared liquid all the way to, and including, the outlet (24).

10. Method according to claim 8 or 9, **characterized in that** during a rinsing operation the milk suction line (16), the air supply line (26) and the outlet line (22) are rinsed at the same time at least partially.

11. Method according to one of the claims 8 to 10, **characterized in that** during a rinsing operation the manifold valve (23) in the outlet line (22) is opened at least temporarily in such a way that the outlet line and the line (27) all the way to the outlet (24) is filled with rinsing fluid.

12. Method according to one of the claims 8 to 11, **characterized in that** before each dispensing of prepared liquid at the outlet (24) the device (1) from the rinsing valve (40) and the valve (44) all the way to the outlet (24) is filled with rinsing fluid, whereby at the start of a dispensing the manifold valve (23) is opened in order to conduct the rinsing fluid out of the device (1) via the nozzle (25) and is then closed when the prepared liquid reaches the manifold valve (23).

## Revendications

1. Dispositif (1) pour la préparation d'un liquide, en particulier du lait, avec un système de rinçage intégré, comprenant
- au moins un réservoir (12, 14) de stockage du liquide, disposé dans une unité de refroidissement (10) ;
- une pompe (18) ;
- un système de conduite, comprenant
- une conduite d'aspiration du lait (16), via laquelle au moins le réservoir (12, 14) peut être relié à la pompe (18),
- une conduite de sortie (22), via laquelle la pompe (18) peut être reliée au moins à la sortie (24), et
- une conduite de rinçage (42), via laquelle la conduite d'aspiration du lait (16) peut être alimentée avec un liquide de rinçage,
- un régulateur de volume d'air (28), au moyen duquel l'air, via une conduite d'alimentation en air (26), peut être dosé et approvisionné jusqu'à un point d'entrée de la conduite d'aspiration du lait (16), et
- un élément de chauffage (34) conçu comme chauffe-eau rapide, qui est disposé dans la conduite de sortie (22) et est conçu comme une unité de chauffage à film épais,
**caractérisé en ce que**
un premier clapet anti-retour (30) un et deuxième clapet anti-retour (32) sont disposés dans la conduite d'alimentation en air (26) entre le régulateur de volume d'air (28) et un point d'entrée dans la conduite d'aspiration du lait (16), le premier clapet anti-retour (30) et le deuxième clapet anti-retour (32) étant réalisés en tant que clapets anti-retour à fermeture directe, et la conduite d'alimentation en air (26) pouvant être raccordée entre le premier clapet anti-retour (30) et le deuxième clapet anti-retour (32) à la conduite de rinçage (42) via une valve (44).

2. Dispositif (1) selon la revendication 1, **caractérisé en ce que** le régulateur de volume d'air (28) compris dans la conduite d'alimentation en air (26), le deuxième clapet anti-retour (32) et le premier clapet anti-retour (30) sont positionnés verticalement l'un en-dessus de l'autre.

3. Dispositif (1) selon l'une des revendications précédentes, **caractérisé en ce que** le régulateur de volume d'air (28) est aménagé pour fournir un dosage d'air à partir de l'unité de refroidissement (10).

4. Dispositif (1) selon l'une des revendications précédentes, **caractérisé en ce que** la conduite de rinçage (42) peut être raccordée à la conduite d'aspiration du lait (16) en-dehors de l'unité de refroidissement (10) via une valve de rinçage (40).

5. Dispositif (1) selon l'une des revendications précédentes, **caractérisé en ce qu'**un limiteur (36) est disposé dans la conduite de sortie (22) en aval de la pompe (18).

6. Dispositif (1) selon l'une des revendications précédentes, **caractérisé en ce qu'**une valve à voies multiples (23) est disposée dans la conduite de sortie (22), qui relie de manière sélective la conduite de sortie (22) à un embout (25) pour décharger le liquide de rinçage, et la sortie (24) à laquelle un liquide préparé peut être dispensé.

7. Dispositif (1) selon l'une des revendications précédentes, **caractérisé en ce qu'**une conduite (27) entre la valve à voies multiples (23) et la sortie (24) possède un volume de remplissage de 2 ml à 3 ml.

8. Méthode de rinçage d'un dispositif (1) pour la préparation de liquide, en particulier du lait, avec un système de rinçage intégré selon l'une des revendications 1 à 7, **caractérisée en ce que**, pour une opération de rinçage via un conduite de rinçage (42), un liquide de rinçage peut être approvisionné, le liquide de rinçage étant conduit au moins partiellement via la conduite d'aspiration du lait (16), la pompe (18), l'élément de chauffage (34) réalisé en tant que chauffe-eau rapide, et la conduite de sortie (22), la conduite d'alimentation en air (26) approvisionnée en liquide de rinçage et rincée par celui-ci via une valve (44).

9. Méthode selon la revendication 8, **caractérisée en ce qu'**une opération de rinçage a lieu après chaque distribution de liquide préparé, et celle-ci s'effectue jusqu'à la sortie (24) incluse.

10. Méthode selon la revendication 8 ou 9, **caractérisée en ce que**, pendant une opération de rinçage, la conduite d'aspiration du lait (16), la conduite d'alimentation en air (26) et la conduite de sortie (22) sont rincées au moins partiellement simultanément.

11. Méthode selon l'une des revendications 8 à 10, **caractérisée en ce que** pendant une opération de rinçage la valve à voies multiples (23) de la conduite de sortie (22) est ouverte au moins temporairement de manière à ce que la conduite de sortie et la conduite (27) soient remplies avec le liquide de rinçage jusqu'à la sortie (24).

12. Méthode selon l'une des revendications 8 à 11, **caractérisée en ce qu'**avant chaque distribution de liquide préparé au niveau de la sortie (24), le dispositif (1) est rempli de liquide de rinçage depuis la valve de rinçage (40) et la valve (44) jusqu'à la sortie (24), la valve à voies multiples (23) étant ouverte au début de la distribution afin de conduire le liquide de rinçage hors du dispositif (1) via l'embout (25), et est ensuite fermée lorsque le liquide préparé atteint la valve à voies multiples (23).
